# FASCICULE DE BREVET EUROPEEN

(11) **EP 2 800 446 B1**
(45) Date de publication et mention de la délivrance du brevet: **21.09.2016**
(21) Numéro de dépôt: 14290126.3
(22) Date de dépôt: 29.04.2014
(51) Int. Cl.: H04W 28/08, H04W 24/04, H04W 92/20

(54) **Procédé pour maintenir un flux de données en provenance d'un site cellule au sein d'un réseau de communication mobile vers un équipement coeur distant, système et programme d'ordinateur associés**
Verfahren zur Aufrechterhaltung eines Datenflusses, der von einem Zellenstandort von einem Mobilfunknetz an ein entferntes Kerngerät übertragen wird, und entsprechendes System und Computerprogramm
Method for maintaining a data stream from a cell site to a remote core device in a mobile communication network , related system and computer program

(30) Priorité: 03.05.2013 FR 1354077
(43) Date de publication de la demande: 05.11.2014
(73) Titulaire: Airbus DS SAS, 78990 Elancourt (FR)
(72) Inventeur: Gruet, Christophe, 78180 Montigny Le Bretonneux (FR); Rabotin, Christopher, 95210 Saint Gratien (FR)
(74) Mandataire: Cabinet Camus Lebkiri

(56) Documents cités:
- US-A1- 2012 063 300
- US-A1- 2012 314 688
- HUAWEI: "Discussion of Home NodeB Grouping Function", 3GPP DRAFT; R3-072088_DISCUSSION OF HOME NODEB GROUPING FUNCTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Jeju Island; 20071031, 31 octobre 2007 (2007-10-31), XP050162882,

## Description

### Domaine technique

La présente invention concerne un procédé pour maintenir un flux de données en provenance d'un site cellule au sein d'un réseau de communication mobile vers un équipement coeur distant et un système mettant en oeuvre un tel procédé. Elle concerne également un système mettant en oeuvre un tel procédé.

L'invention concerne plus particulièrement mais de manière non limitative le domaine de la perte de connectivité et donc de service dans un système de communication mobile par ondes radio utilisées sur une courte ou moyenne distance (on parlera de PMR en anglais, pour « Private Mobile Radiocommunications »).

### Etat de la technique

On connaît des solutions proposées pour résoudre le problème de la perte de connectivité dans les réseaux PMR. De telles solutions ont notamment été proposées dans les documents US2010/0281151 (Provisioning Available Network Resources) et US2011/0096750 (Dynamic Gateway Sélection Process).

Cependant, un problème non résolu par de telles solutions est celui de l'isolation d'une cellule LTE du reste du réseau dans le cas d'une déconnexion du coeur distant en cas de défaillance d'une connexion prévue entre la cellule LTE et le coeur distant.

L'invention a pour but de résoudre au moins ces problèmes posés par l'état de la technique.

### Exposé de l'invention

On atteint un tel objectif avec un procédé pour maintenir un flux de données en provenance d'un site cellule au sein d'un réseau de communication mobile vers un équipement coeur distant (EPC High) en cas de défaillance d'une connexion prévue entre ledit site cellule et ledit équipement coeur distant selon un premier protocole S5, caractérisé en ce qu'il comprend une redirection, selon un second protocole X2 dudit flux de données vers ledit équipement coeur distant (EPC High) via un équipement coeur local (EPC Low) relié audit équipement coeur distant (EPC High).

Dans une version avantageuse, le procédé selon l'invention peut mettre en oeuvre un équilibrage dynamique de charge de passerelles de paquets de données (PGW) dans des équipements coeurs (EPC) au sein du réseau de communication mobile, en cas de défaillance d'un site cellule du fait de sa déconnexion d'avec l'équipement coeur distant (EPC High) recevant normalement du site cellule un flux de données, et en ce que le flux de données est redirigé vers une passerelle de paquets de données (PGW) de l'équipement coeur local (EPC Low) puis est traité par un serveur d'application (PMR) local connecté à la passerelle de paquets de données (PGW), de façon à acheminer le flux de données vers le équipement coeur distant (EPC). Cet équilibrage dynamique de charge permet de tenir compte de la charge actuelle d'éléments de réseau utilisés pour la redirection.

Dans une version particulière, la redirection du flux de données peut mettre en oeuvre une connexion d'interface (S5) au sein de l'équipement coeur (EPC Low) entre une passerelle serveur (SGW) et la passerelle de paquets de données (PGW) de l'équipement coeur local (EPC Low).

De plus, le procédé selon l'invention peut en outre comprendre une détection de stations de base (eNode Bs) connectées au site cellule défaillant, une requête d'informations notamment relatives à la charge desdites stations de base ainsi détectées et à la qualité de leur connexion avec l'équipement coeur distant (EPC High) et un traitement desdites informations pour déterminer au moins un équipement coeur local de redirection.

De plus, la détection des stations de base (eNode Bs) connectées au site cellule défaillant peut mettre en oeuvre une table préconfigurée stockée dans une mémoire.

Avantageusement, la détection des stations de base (eNode Bs) connectées au site cellule défaillant peut mettre en oeuvre un protocole de localisation de service (SLP).

De plus, le procédé selon l'invention peut en outre comprendre une requête d'allocation de bande passante, émise par le site cellule défaillant auprès de chaque site cellule incluant l'une des stations de base détectées et connecté à l'équipement coeur distant (EPC High).

En outre, le procédé selon l'invention peut comprendre en réponse à une approbation par un site cellule de la requête d'allocation de bande passante, un basculement du flux de données destiné à l'équipement coeur distant (EPC High) via le site cellule ayant approuvé la requête.

Avantageusement, le site cellule ayant approuvé la requête peut spécifier une durée d'allocation d'une bande passante pour redirection. Ainsi, le procédé a pour avantage de tenir compte d'allocation temporelle de bande passante.

Dans une version particulière, le flux de données à basculer est organisé en paquets de données selon un premier protocole (S5) et le basculement du flux de données peut mettre en oeuvre une encapsulation des paquets de données selon un second protocole (X2) utilisé dans les communications entre stations de base (eNode Bs).

De plus, le procédé selon l'invention peut en outre comprendre une surveillance de l'état de la connexion directe entre le site cellule défaillant et l'équipement coeur distant (EPC High) et, en cas de détection d'un rétablissement de la connexion directe, un rebasculement du flux de données vers l'équipement coeur distant (EPC High) via la connexion d'interface (S5) reliant la passerelle serveur (SGW) de l'équipement coeur local (EPC Low) à la passerelle de paquets de données (PGW) de l'équipement coeur distant (EPC High).

En particulier, le réseau de communication mobile peut être de type LTE ("Long Term Evolution").

Selon un autre aspect de l'invention, il est proposé un système de communication mobile mettant en oeuvre un procédé de maintien de flux de données selon l'invention.

Selon un autre aspect de l'invention, il est proposé un programme d'ordinateur comportant des instructions pour la mise en oeuvre du procédé selon l'invention lorsque le programme est exécuté par au moins un processeur.

### Description des figures et modes de réalisation

D'autres avantages et particularités de l'invention apparaîtront à la lecture de la description détaillée de mise en oeuvre et d'un mode de réalisation nullement limitatif, et du dessin annexé suivant :
- la figure 1 est une vue schématique détaillée d'une partie d'un système mettant en oeuvre un procédé selon l'invention selon un premier mode de réalisation,
- la figure 2 est une vue schématique de plus haut niveau d'un système mettant en oeuvre un procédé selon l'invention selon un premier mode de réalisation, et
- la figure 3 est une vue schématique d'une partie d'un système mettant en oeuvre un procédé selon l'invention selon un deuxième mode de réalisation.

Ces modes de réalisation étant nullement limitatifs, on pourra notamment considérer des variantes de l'invention ne comprenant qu'une sélection de caractéristiques décrites par la suite isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieure.

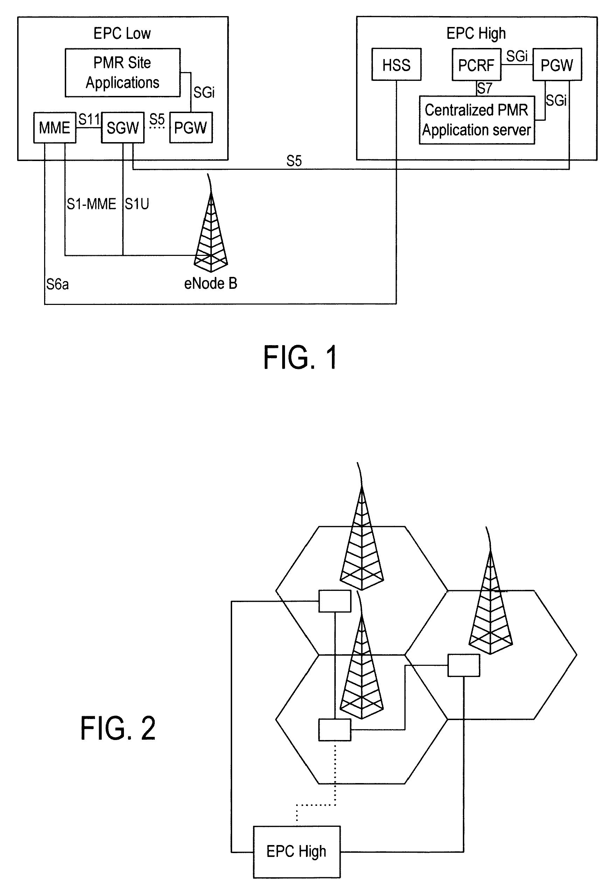

On va maintenant décrire en référence à la figure 1, une vue schématique détaillée d'une partie d'un système mettant en oeuvre un procédé selon l'invention.

La figure 1 illustre un équipement coeur local EPC Low relié à un équipement coeur distant EPC High dans un réseau de communication mobile de type LTE ("Long Term Evolution").

L'équipement coeur local EPC Low est également relié à une station de base eNode B.

L'équipement coeur local EPC Low comprend :
- un MME, pour « Mobility Management Entity », c'est à dire une entité de gestion de la mobilité ;
- un SGW, pour « Serving Gateway », c'est à dire une passerelle de service, et
- un PGW, pour « PDN Gateway », c'est à dire une passerelle de PDN « Packet Data Network » , et un PMR Site Applications, c'est à dire un serveur d'application PMR local.

Le MME est relié au SGW par une liaison S11, tandis que le SGW est relié au PGW par une liaison S5 et le PGW est relié au PRM Site Applications par une liaison SGi.

L'eNode B est relié au EPC Low via une liaison S1-MME entre l'eNode B et le MME et une liaison S1U entre l'eNode B et le SGW.

L'équipement coeur distant EPC High comprend :
- un HSS, pour « Home Subscriber Serveur », c'est à dire une base de données centrale qui contient des informations relatives à l'utilisateur et à l'abonnement correspondant,
- un PCRF, pour « Policy and Charging Rules Function », c'est à dire un composant logiciel qui fonctionne au coeur de réseau et permet d'accéder à des bases de données d'abonnés et d'autres fonctions spécialisées, comme un système de charge, de manière centralisée, et
- un PGW et un Centralized PMR applications Serveur, c'est à dire un serveur d'application PMR centralisé.

Le PCRF est relié au PGW par une liaison SGi, le PGW est relié au Centralized PMR Application server par une liaison SGi et le PCRF est relié au Centralized PMR Application server par une liaison S7.

Le MME de l'équipement coeur local EPC Low est relié au HSS de l'équipement coeur distant via une liaison S6a tandis que le SGW de l'équipement coeur local EPC Low est relié au HSS de l'équipement coeur distant EPC High.

Lorsque la liaison S5 entre le SGW de l'équipement coeur local EPC Low et l'équipement coeur distant EPC High est coupée, la liaison S5 entre les équipements SGW et PGW de l'équipement coeur local EPC Low est mise en oeuvre. Il y a également un HSS local (non représenté) au sein de l'équipement coeur local EPC Low servant de HSS quand le HSS au sein de l'équipement coeur distant EPC High n'est plus disponible. Le HSS local permet d'entretenir un profil par défaut des abonnés présents et permet aussi une authentification allégée (par rapport à l'authentification usuelle) de ceux qui veulent s'y connecter.

Le procédé selon l'invention propose de maintenir un flux de données en provenance d'un site cellule au sein d'un réseau de communication mobile vers un équipement coeur distant EPC High en cas de défaillance d'une connexion prévue entre le site cellule et l'équipement coeur distant selon un premier protocole S5.

Sur la figure 2 sont illustrées plusieurs cellules, représentées par des hexagones, comprenant chacune :
- un eNode B illustré par une antenne et
- un EPC Low, illustré par un rectangle.

De plus, il est représenté sur la figure 2 la présence d'un équipement coeur distant EPC High, relié via des liaisons S5 aux différents EPC Low des différentes cellules.

Il est également représenté des liaisons entre les différents EPC Low. Ces liaisons sont des liaisons de type X2.

Le procédé selon l'invention maintient un flux de données en provenance d'un site cellule au sein d'un réseau de communication mobile vers un équipement coeur distant EPC High en cas de défaillance d'une connexion prévue entre le site cellule et l'équipement équipement coeur distant selon un premier protocole S5. Cette redirection est réalisée selon un second protocole X2, du flux de données vers l'équipement coeur distant EPC High via un équipement coeur local EPC Low relié à l'équipement coeur distant EPC High.

De plus, le procédé selon l'invention met en oeuvre un équilibrage dynamique de charge de passerelles de paquets de données PGW dans des équipements coeurs EPC Low au sein du réseau de communication mobile, en cas de défaillance d'un site cellule du fait de sa déconnexion d'avec l'équipement coeur distant EPC High recevant normalement du site cellule un flux de données. Le flux de données est redirigé vers une passerelle de paquets de données PGW de l'équipement coeur local EPC Low. Il est ensuite traité par un serveur d'application PMR local connecté à la passerelle de paquets de données PGW, de façon à acheminer le flux de données vers l'équipement coeur distant EPC.

Le procédé selon l'invention comprend en outre une détection de stations de base eNode Bs connectées au site cellule défaillant, une requête d'informations notamment relatives à la charge desdites stations de base ainsi détectées et à la qualité de leur connexion avec l'équipement coeur distant EPC High et un traitement desdites informations pour déterminer au moins un équipement coeur local de redirection.

La détection des stations de base eNode Bs connectées au site cellule défaillant met en oeuvre une table préconfigurée stockée dans une mémoire et un protocole de localisation de service SLP.

Le procédé selon l'invention comprend une requête d'allocation de bande passante, émise par le site cellule défaillant auprès de chaque site cellule incluant l'une des stations de base détectées et connecté à l'équipement coeur distant EPC High.

En réponse à une approbation par un site cellule de la requête d'allocation de bande passante, le procédé selon l'invention procède à un basculement du flux de données destiné à l'équipement coeur distant (EPC High) via le site cellule ayant approuvé la requête.

Le site cellule ayant approuvé la requête spécifie une durée d'allocation d'une bande passante pour redirection.

Le flux de donnés à basculer est organisé en paquets de données selon un premier protocole S5. Le basculement du flux de données met en oeuvre une encapsulation des paquets de données selon un second protocole X2 utilisé dans les communications entre stations de base eNode Bs.

Le procédé selon l'invention met en oeuvre une surveillance de l'état de la connexion directe entre le site cellule défaillant et l'équipement coeur distant (EPC High). En cas de détection d'un rétablissement de la connexion directe, un rebasculement du flux de données est réalisé vers l'équipement coeur distant EPC High via la connexion d'interface S5 reliant la passerelle serveur SGW de l'équipement coeur local EPC Low à la passerelle de paquets de données PGW de l'équipement coeur distant EPC High.

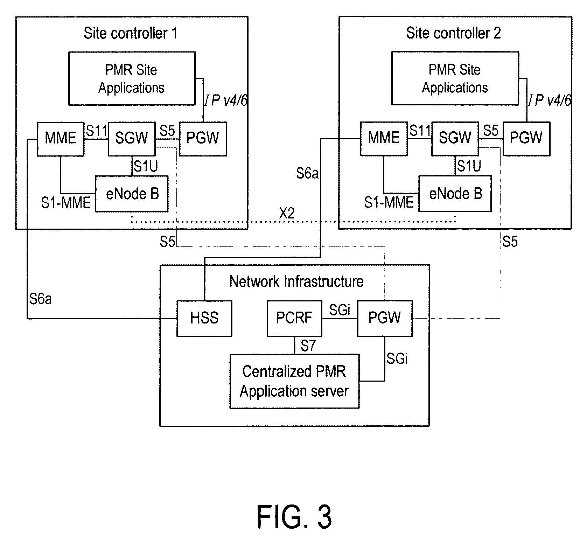

La figure 3 illustre deux équipements coeur local EPC Low, notés Site controller 1 et Site controller 2, reliés à un équipement coeur distant EPC High, noté Network infrastructure, dans un réseau de communication mobile de type LTE ("Long Term Evolution").

Les équipements de type coeur local EPC Low comprennent:
- un MME,
- un SGW,
- un PGW et un PMR Site Applications.

Le MME est relié au SGW par une liaison S11, tandis que le SGW est relié au PGW par une liaison S5 et le PGW est relié au PRM Site Applications par une liaison IP v4/6.

L'eNode B est relié au EPC Low via une liaison S1-MME entre l'eNode B et le MME et une liaison S1U entre l'eNode B et le SGW.

L'équipement coeur distant EPC High, noté Network Infrastructure, comprend :
- un HSS,
- un PCRF,
- un PGW et un Centralized PMR applications Serveur.

Le PCRF est relié au PGW par une liaison SGi, le PGW est relié au Centralized PMR Application server par une liaison SGi et le PCRF est relié au Centralized PMR Application server par une liaison S7.

Le MME de l'équipement coeur local EPC Low est relié au HSS de l'équipement coeur distant via une liaison S6a tandis que le SGW de l'équipement coeur local EPC Low est relié au HSS de l'équipement coeur distant EPC High.

Lorsque la liaison S5 entre le SGW de l'équipement coeur local EP Low et l'équipement coeur distant EPC High est coupée, la liaison S5 entre les équipements SGW et PGW de l'équipement coeur local EPC Low est mise en oeuvre.

Les équipements coeur locaux EPC Low, notés Site controller 1 et Site controller 2, sont reliés entre eux par une liaison X2.

Il va maintenant être décrit une méthode de routage entre un eNode B qui perd sa connectivité avec un EPC High.

Il va en particulier être décrit une méthode de routage entre l'eNode B du premier équipement coeur local, Site controller 1, qui perd sa connectivité avec l'équipement coeur distant EPC High, noté Network Infrastructure.

Le eNodeB1 doit aiguiller via l'eNodeB2 voisin des flux de signalisation vers une ou éventuellement plusieurs MME (pour les besoins propres de l'eNodeB1 mais aussi pour les besoins de signalisation des mobiles qu'il a à gérer) et également établir des ponts de trafic pour les mobiles connectés.

La logique GTP (GPRS Tunneling Protocol) est utilisée. Le GTP est un mécanisme classique dans le 3GPP, permettant de créer et gérer des tunnels IP entre deux entités dont on connait les adresses IP avec une capacité de distinction des sous-flux que ces deux entités sont susceptibles d'échanger dans les tunnels. Cette distinction est pratique pour gérer les problématiques de routage qui peuvent nécessiter des gestions de qualité de service ou des redirections différentes.

Un tunnel GTP encapsule les flux de trafic d'un mobile identifié par une certaine identité (UEId) dans un tunnel IP. Un terminal peut avoir besoin de gérer en parallèle plusieurs flux de trafic ayant chacun une identité (RBId). Un identifiant unique appelé TEID (Tunnel Endpoint Identifier) est créé et identifie le flux de manière unique.

Pour le sens descendant, un SGW multiplement connecté à plusieurs PGW pour recevoir des flux à destination de différents mobiles connaît, en analysant l'entête GTP, l'identité TEID du terminal (UEId) concerné et de quel flux du mobile il est question (RBId). De même, pour le sens montant, un PGW multiplement connecté à plusieurs SGW fera de même pour séparer terminal et flux.

La valeur du TEID est négociée préalablement entre les deux entités qui ont l'intention d'encapsuler de tels flux.

Lors de la négociation entre les deux eNodeB quand l'un des deux équipements coeurs locaux est défaillant (eNodeB1) et que l'autre non (eNodeB2), il est créé un tunnel GTP entre les deux eNodeBs.

Ce tunnel est dédié à écluser les flux de signalisation vers un MME dont le eNodeB1 a besoin et que le eNodeB2 lui permet de joindre. Au niveau de l'eNodeB2, un processus de translation d'adresse IP est opéré par le eNodeB2 pour les flux à destination du MME afin de substituer l'adresse de l'eNodeB1 présent dans le flux IP encapsulé par une adresse maitrisée par le eNodeB2.

Pour les flux revenant du MME et destinés au eNodeB1, cette adresse translatée est utilisée par le eNodeB2 pour repositionner ces flux dans le bon tunnel inter eNodeBs en procédant à la translation inverse.

Lorsque le eNodeB1 a besoin d'indiquer dans les messages de signalisation l'adresse translatée, alors il faut soit que le eNodeB2 l'indique au eNodeB1 durant le dialogue initial afin que l'eNodeB1 la place dans les messages qui en ont besoin, soit qu'une analyse des messages de signalisation produits par l'eNodeB1 (ou selon le protocole S1-AP) soit réalisée par l'eNodeB2 afin que ce dernier agisse en connaissance de cause.

Pour les flux de trafic, le même principe est utilisé. Un tunnel GTP est créé par flux et par terminal entre les deux eNodeBs mais la translation d'adresse précédemment décrite est remplacée cette fois par une seconde encapsulation GTP entre le eNodeB2 et le SGW externe (si EPC normal) ou le SGW interne et le PGW externe (si EPC HIGH).

Ainsi, l'invention apporte une solution au problème d'isolement d'une cellule LTE pour le reste du réseau en cas de déconnexion de la passerelle de paquet de l'infrastructure de réseau.

Elle permet l'utilisation automatique d'une passerelle de paquet de sauvegarde locale et d'un serveur d'application en cas de déconnexion précitée.

Elle permet enfin l'activation d'un chemin de redirection, qui prend en compte la charge de l'élément de réseau utilisé pour la redirection.

Bien sûr, l'invention n'est pas limitée aux exemples qui viennent d'être décrits et de nombreux aménagements peuvent être apportés à ces exemples sans sortir du cadre de l'invention.

## Revendications

1. Procédé pour maintenir un flux de données en provenance d'un site cellule au sein d'un réseau de communication mobile vers un équipement coeur distant (EPC High) en cas de défaillance d'une connexion prévue entre ledit site cellule et ledit équipement coeur distant selon un premier protocole S5, **caractérisé en ce qu'**il comprend une redirection, selon un second protocole X2, dudit flux de données vers ledit équipement coeur distant (EPC High) via un équipement coeur local (EPC Low) relié audit équipement coeur distant (EPC High).

2. Procédé selon la revendication 1, **caractérisé en ce qu'**il met en oeuvre un équilibrage dynamique de charge de passerelles de paquets de données (PGW) dans des équipements coeurs (EPC) au sein du réseau de communication mobile, en cas de défaillance d'un site cellule du fait de sa déconnexion d'avec l'équipement coeur distant (EPC High) recevant normalement dudit site cellule un flux de données, et **en ce que** le flux de données est redirigé vers une passerelle de paquets de données (PGW) de l'équipement coeur local (EPC Low) puis est traité par un serveur d'application (PMR) local connecté à ladite passerelle de paquets de données (PGW), de façon à acheminer ledit flux de données vers ledit équipement coeur distant (EPC).

3. Procédé selon la revendication 2, **caractérisé en ce que** la redirection du flux de données met en oeuvre une connexion d'interface S5 au sein de l'équipement coeur (EPC Low) entre une passerelle serveur (SGW) et la passerelle de paquets de données (PGW) de l'équipement coeur local (EPC Low).

4. Procédé selon la revendication 3, **caractérisé en ce qu'**il comprend en outre une détection de stations de base (eNode Bs) connectées au site cellule défaillant, une requête d'informations notamment relatives à la charge desdites stations de base ainsi détectées et à la qualité de leur connexion avec l'équipement coeur distant (EPC High) et un traitement desdites informations pour déterminer au moins un équipement coeur local de redirection.

5. Procédé selon la revendication 4, **caractérisé en ce que** la détection des stations de base (eNode Bs) connectées au site cellule défaillant met en oeuvre une table préconfigurée stockée dans une mémoire.

6. Procédé selon l'une des revendications 4 ou 5, **caractérisé en ce que** la détection des stations de base (eNode Bs) connectées au site cellule défaillant met en oeuvre un protocole de localisation de service (SLP).

7. Procédé selon l'une des revendications 4 à 6, **caractérisé en ce qu'**il comprend en outre une requête d'allocation de bande passante, émise par le site cellule défaillant auprès de chaque site cellule incluant l'une des stations de base détectées et connecté à l'équipement coeur distant (EPC High).

8. Procédé selon la revendication 7, **caractérisé en ce qu'**il comprend en outre, en réponse à une approbation par un site cellule de la requête d'allocation de bande passante, un basculement du flux de données destiné à l'équipement coeur distant (EPC High) via ledit site cellule ayant approuvé la requête.

9. Procédé selon l'une des revendications 7 ou 8, **caractérisé en ce que** le site cellule ayant approuvé la requête spécifie une durée d'allocation d'une bande passante pour redirection.

10. Procédé selon l'une des revendications 8 ou 9, dans lequel le flux de donnés à basculer est organisé en paquets de données selon un premier protocole S5, **caractérisé en ce que** le basculement du flux de données met en oeuvre une encapsulation desdits paquets de données selon un second protocole X2 utilisé dans les communications entre stations de base (eNode Bs).

11. Procédé selon l'une quelconque des revendications 3 à 10, **caractérisé en ce qu'**il comprend en outre une surveillance de l'état de la connexion directe entre le site cellule défaillant et l'équipement coeur distant (EPC High) et, en cas de détection d'un rétablissement de ladite connexion directe, un rebasculement du flux de données vers ledit équipement coeur distant (EPC High) via la connexion d'interface S5 reliant la passerelle serveur (SGW) de l'équipement coeur local (EPC Low) à la passerelle de paquets de données (PGW) de l'équipement coeur distant (EPC High).

12. Procédé selon l'une quelconque des revendications précédentes, **caractérisé en ce que** le réseau de communication mobile est de type LTE ("Long Term Evolution").

13. Système de communication mobile mettant en oeuvre un procédé de maintien de flux de données selon l'une quelconque des revendications précédentes.

14. Programme d'ordinateur comportant des instructions pour la mise en oeuvre du procédé de maintien de flux de données selon l'une quelconque des revendications 1 à 12 lorsque le programme est exécuté par au moins un processeur.

## Patentansprüche

1. Verfahren zur Aufrechterhaltung eines aus einem Zellenstandort stammenden Datenflusses innerhalb eines mobilen Kommunikationsnetzes zu einem entfernten Evolved Packet Core (EPC High) für den Fall eines Ausfalls einer Verbindung, die zwischen dem genannten Zellenstandort und dem genannten entfernten Evolved Packet Core gemäß einem ersten Protokoll S5 vorgesehen ist, **dadurch gekennzeichnet, dass** sie gemäß einem zweiten Protokoll X2 eine Umleitung des genannten Datenstroms zu dem genannten entfernten Evolved Packet Core (EPC High) über ein lokales Evolved Packet Core (EPC Low) umfasst, das an das genannte entfernte Evolved Packet Core (EPC High) angeschlossen ist.

2. Verfahren gemäß Anspruch 1, **dadurch gekennzeichnet, dass** es ein dynamisches Abgleichen von Übergangslasten von Datenpaketen (PGW) in Evolved Packet Cores (EPC) innerhalb eines mobilen Kommunikationsnetzes für den Fall eines Ausfalls eines Zellenstandortes aufgrund seiner Trennung von dem entfernten Evolved Packet Core (EPC High) umsetzt, das normalerweise von dem genannten Zellenstandort einen Datenstrom empfängt, und dass der Datenstrom zu einem Datenpaket-Übergang (PGW) des lokalen Evolved Packet Cores (EPC Low) umgeleitet wird, dann von einem lokalen Anwendungsserver (PMR), der an den genannten Datenpaket-Übergang (PGW) angeschlossen ist, derart verarbeitet wird, dass der genannte Datenstrom zu dem genannten entfernten Evolved Packet Core (EPC) geleitet wird.

3. Verfahren gemäß Anspruch 2, **dadurch gekennzeichnet, dass** die Umleitung des Datenstroms einen Schnittstellenanschluss S5 innerhalb des Evolved Packet Cores (PEC Low) zwischen einem Server-Übergang (SGW) und dem Datenpaket-Übergang (PGW) des lokalen Evolved Packet Cores (EPC Low) umsetzt.

4. Verfahren gemäß Anspruch 3, **dadurch gekennzeichnet, dass** es darüber hinaus eine Erfassung von Basistationen (eNOde Bs), die an den ausgefallenen Zellenstandort angeschlossen sind, eine Informationsanfrage, insbesondere bezüglich der Last der genannten, somit erfassten Basisstationen und der Qualität ihres Anschlusses an das Evolved Packet Core (EPC High) und eine Verarbeitung der genannten Informationen umfasst, um wenigstens ein lokales Umleitungs-Evolved Packet Core zu bestimmen.

5. Verfahren gemäß Anspruch 4, **dadurch gekennzeichnet, dass** die Erfassung der Basisstationen (eNode Bs), die an den ausgefallenen Zellenstandort angeschlossen sind, eine in einem Speicher gespeicherte, vorkonfigurierte Tabelle umsetzt.

6. Verfahren gemäß Anspruch 4 oder 5, **dadurch gekennzeichnet, dass** die Erfassung der Basisstationen (eNode Bs), die an den ausgefallenen Zellenstandort angeschlossen sind, ein Dienstlokalisierungsprotokoll (SLP) umsetzt.

7. Verfahren gemäß Anspruch 4 bis 6, **dadurch gekennzeichnet, dass** es darüber hinaus die von dem ausgefallenen Zellenstandort an jedem Zellenstandort, der eine der erfassten Basisstationen einschließt und an das entfernte Evolved Packet Core (EPC High) angeschossen ist, ausgegebene Anforderung einer Zuteilung einer Bandbreite umfasst.

8. Verfahren gemäß Anspruch 7, **dadurch gekennzeichnet, dass** es darüber hinaus als Antwort auf eine Zulassung der Anforderung der Zuteilung einer Bandbreite durch einen Zellenstandort ein Umschalten des für das Evolved Packet Core (EPC) bestimmten Datenstroms über den genannten Zellenstandort umfasst, der die Anforderung zugelassen hat.

9. Verfahren gemäß Anspruch 7 oder 8, **dadurch gekennzeichnet, dass** der Zellenstandort, der die Anforderung zugelassen hat, eine Zuteilungsdauer einer Bandbreite zur Umleitung spezifiziert.

10. Verfahren gemäß Anspruch 8 oder 9, bei dem der umzuschaltende Datenstrom in Datenpaketen gemäß einem ersten Protokoll S5 organisiert ist, **dadurch gekennzeichnet, dass** das Umschalten des Datenstroms eine Verkapselung der genannten Datenpakete gemäß einem zweiten Protokoll X2 umsetzt, das in den Kommunikationen zwischen Basisstationen (eNode Bs) verwendet wird.

11. Verfahren gemäß Anspruch 3 bis 10, **dadurch gekennzeichnet, dass** es darüber hinaus eine Überwachung des Zustandes der direkten Verbindung zwischen dem ausgefallenen Zellenstandort und dem entfernten Evolved Packet Core (EPC High) und für den Fall einer Erfassung einer Wiederherstellung des genannten direkten Anschlusses ein erneutes Umschalten des Datenstroms zu dem genannten entfernten Evolved Packet Core (EPC High) über die Schnittstellenverbindung S5 umfasst, die den Server-übergang (SGW) des lokalen Evolved Packet Cores (EPC Low) mit dem Datenpaket-Übergang (PGW) des entfernten Evolved Packet Cores (EPC High) verbindet.

12. Verfahren gemäß einem der voranstehenden Ansprüche, **dadurch gekennzeichnet, dass** das mobile Kommunikationsnetz vom Typ LTE ("Long Term Evolution") ist.

13. Mobiles Kommunikationsnetz, das ein Verfahren zur Aufrechterhaltung eines Datenstroms gemäß einem der voranstehenden Ansprüche umsetzt.

14. Computerprogramm, umfassend Anweisungen für die Umsetzung des Verfahrens zur Aufrechterhaltung eines Datenstroms gemäß Anspruch 1 bis 12, wenn das Programm durch wenigstens einen Prozessor ausgeführt wird.

## Claims

1. Method for maintaining a data stream from a cell site within a mobile communication network to a remote core device (EPC High) in case of failure of a planned connection between said cell site and said remote core device according to a first protocol S5, **characterised in that** it comprises a redirection, according to a second protocol X2, of said data stream to said remote core device (EPC High) via a local core device (EPC Low) connected to said remote core device (EPC High).

2. Method according to claim 1, **characterised in that** it implements a data packet gateway dynamic load balancing (PGW) in core devices (EPC) within a mobile communication network, in case of failure of a cell site due to its disconnection from the remote core device (EPC High) normally receiving from said cell site a data stream, and **in that** the data stream is redirected to a data packet gateway (PGW) of the local core device (EPC Low) then is processed by a local application server (PMR) connected to said data packet gateway (PGW), in such a way as to carry said data stream to said remote core device (EPC).

3. Method according to claim 2, **characterised in that** the redirection of the data stream implements an interface connection S5 within the core device (EPC Low) between a server gateway (5GW) and the data packet gateway (PGW) of the local core device (EPC Low).

4. Method according to claim 3, **characterised in that** it further comprises a detection of base stations (eNode Bs) connected to the failed cell site, a request for information in particular concerning the load of said base stations detected as such and the quality of their connection with the remote core device (EPC High) and a processing of said information in order to determine at least one local core device for redirection.

5. Method according to claim 4, **characterised in that** the detection of the base stations (eNode Bs) connected to the failed cell site implements a preconfigured table stored in a memory.

6. Method according to one of claims 4 or 5, **characterised in that** the detection of the base stations (eNode Bs) connected to the failed cell site implements a service location protocol (SLP).

7. Method according to one of claims 4 to 6, **characterised in that** it further comprises a bandwidth allocation request, emitted by the failed cell site to each cell site including one of the base stations detected and connected to the remote core device (EPC High).

8. Method according to claim 7, **characterised in that** it further comprises, as a response to an allocation by a cell site to the bandwidth allocation request, a switching of the data stream intended for the remote core device (EPC High) via said cell site having approved the request.

9. Method according to one of claims 7 or 8, **characterised in that** the cell site having approved the request specifies an allocation duration of the bandwidth for redirection.

10. Method according to one of claims 8 or 9, wherein the data stream to be switched is organised into data packets according to a first protocol S5, **characterised in that** the switching of the data stream implements an encapsulation of said data packets according to a second protocol X2 used in the communications between base stations (eNode Bs).

11. Method according to any of claims 3 to 10, **characterised in that** it further comprises a monitoring of the state of the direct connection between the failed cell site and the remote core device (EPC High) and, in the case of a detection of a reestablishment of said direct connection, a re-switching of the data stream to said remote core device (EPC High) via the interface connection S5 connecting the server gateway (SGW) of the local core device (EPC Low) to the data packet gateway (PGW) of the remote core device (EPC High).

12. Method as claimed in any preceding claim, **characterised in that** the mobile communication network is of the LTE ("Long Term Evolution") type.

13. Mobile communication system implementing a method for maintaining the stream of data as claimed in any preceding claim.

14. Computer program comprising instructions for the implementation of the method for maintaining the stream of data according to any of claims 1 to 12 when the program is executed by at least one processor.
